# EUROPEAN PATENT SPECIFICATION

(11) **EP 3 199 808 B1**
(45) Date of publication and mention of the grant of the patent: **11.08.2021**
(21) Application number: 16204306.1
(22) Date of filing: 15.12.2016
(51) Int. Cl.: F04B 1/04, F04B 1/053, F04B 1/113, F03C 1/30, F03C 1/053, F04B 41/04

(54) **HYDRAULIC MACHINE, RING CAM, AND RENEWABLE-ENERGY TYPE POWER GENERATING APPARATUS**
HYDRAULIKMASCHINE, RINGNOCKEN UND VORRICHTUNG ZUR ERZEUGUNG VON STROM VOM TYP DER ERNEUERBAREN ENERGIE
MACHINE HYDRAULIQUE, CAME ANNULAIRE ET APPAREIL DE GÉNÉRATION DE PUISSANCE DE TYPE À ÉNERGIE RENOUVELABLE

(30) Priority: 26.01.2016 JP 2016012332
(43) Date of publication of application: 02.08.2017
(73) Proprietor: Mitsubishi Heavy Industries, Ltd., Tokyo 108-8215 (JP)
(72) Inventor: Ochiai, Hiroyasu, Tokyo 108-8215 (JP); Sasaki, Masashi, Tokyo 108-8215 (JP); Uchida, Mitsuya, Kobe-shi Hyogo 652-0863 (JP)
(74) Representative: Henkel & Partner mbB

(56) References cited:
- EP-B1- 0 692 071
- EP-B1- 2 529 112
- US-A1- 2012 059 523
- US-A1- 2012 260 765

## Description

### TECHNICAL FIELD

The present disclosure relates to a hydraulic machine, a ring cam, and a renewable-energy type power generating apparatus.

### BACKGROUND ART

A radial-piston type hydraulic machine may be provided with a ring cam including a plurality of cam segments, as a cam for converting motion between rotational motion of a rotor shaft and reciprocating motion of pistons.

JP 5409920B discloses, for example, a ring cam with a plurality of cam segments including a preceding segment and a trailing segment. In the ring cam, the preceding segment and the trailing segment are arranged adjacently in the rotational direction of the ring cam, and are coupled to each other by engagement between a tongue structure having a protruding shape on the preceding segment and a tongue structure having a recessed shape on the trailing segment. Each cam segment has a cam surface that faces pistons. When the ring cam rotates with the rotor shaft, piston rollers transit from the cam surface of the tongue structure of the preceding segment to the cam surface of the tongue structure of the trailing segment, in a region where the two cam segments are coupled.

US 2012/0260765A1 discloses a ring cam and a fluid working machine including the ring cam with the features of the preamble portion of claim 1 and 9, respectively.

### SUMMARY

Meanwhile, with a ring cam including a plurality of cam segments, if piston rollers (piston assemblies) do not transit smoothly from a cam segment to another in a coupling region of the cam segments, abrasion may be generated on the piston rollers or on cam surfaces. Thus, it is desirable that the piston rollers are capable of smooth transition from a cam segment to another.

In connection to a configuration for allowing piston rollers (piston assemblies) to transit smoothly from a cam segment to another, Patent Document 1 merely specifies that pistonfacing surfaces at the foremost end of the tongue structure of the trailing segment and at rearmost end of the tongue structure of the preceding segment are recessed from cam working surfaces.

Thus, presentation of a more-specific configuration is desired to realize smooth transition of piston assemblies from a cam segment to another.

In view of the above, an object of at least one embodiment of the present invention is to provide a hydraulic machine whereby piston assemblies can transit smoothly from a cam segment to another.

(1) A hydraulic machine of a radial-piston type according to the present invention comprises the features of claim 1 including: a rotor shaft extending in an axial direction of the hydraulic machine; a ring cam extending in a circumferential direction of the hydraulic machine and configured to rotate together with the rotor shaft; and a piston assembly configured to perform reciprocating motion in accordance with rotation of the ring cam. The ring cam comprises a plurality of cam segments arranged in the circumferential direction. At least one adjacent pair of the plurality of cam segments includes a preceding segment and a following segment disposed subsequent to the preceding segment in a rotational direction of the ring cam. The preceding segment has a first engagement portion protruding toward the following segment at a trailing end portion of the preceding segment. The following segment has a second engagement portion protruding toward the preceding segment at a leading end portion of the following segment and being engageable with the first engagement portion of the preceding segment. The first engagement portion has a first cam surface in the trailing end portion of the preceding segment, the first cam surface facing the piston assembly, and the second engagement portion has a second cam surface in the front end portion of the following segment, the second cam surface facing the piston assembly. The first cam surface is disposed closer to the piston assembly than the second cam surface with respect to a radial direction of the hydraulic machine at a front end of the second cam surface. The first cam surface and the second cam surface intersect each other in an engagement region of the first engagement portion and the second engagement portion.

With the above configuration (1), the first cam surface of the first engagement portion of the preceding segment, at the front end of the second cam surface of the second engagement portion of the following segment to be engaged with the first engagement portion, is disposed closer to the piston assembly than the second cam surface in the radial direction of the hydraulic machine, while the first cam surface and the second cam surface intersect each other in the engagement region of the first engagement portion and the second engagement portion. Accordingly, when the piston assembly moves upstream in the rotational direction of the ring cam on the cam surface in accordance with the rotation of the rotor shaft, the piston assembly is in contact with the first cam surface from the start point of the engagement region (i.e., the position of the front end of the second cam surface in the circumferential direction) to the intersection point at which the first engagement portion and the second engagement portion intersect each other in the engagement region, and in contact with the second cam surface from the intersection point. Accordingly, with the above configuration (1), the piston assembly transits smoothly from the preceding segment to the following segment.

In the above configuration (1), the engagement region has a length in the circumferential direction of the rotor shaft. Thus, in the event of misalignment of relative positions of the first engagement portion and the second engagement portion in the circumferential direction or the radial direction, the position of intersection between the first cam surface and the second cam surface may become offset in the circumferential direction or the radial direction as much as the misalignment, but the smoothness of the transition of the piston assembly from a cam segment to another is less affected. Accordingly, with the above configuration (1), it is possible to provide a large machining tolerance for the cam segments, which facilitates fabrication of the ring cam.

(2) In some embodiments, in the above configuration (1), the second cam surface is disposed closer to the piston assembly than the first cam surface with respect to the radial direction of the hydraulic machine, at a rear end of the first cam surface.

With the above configuration (2), the piston assembly is in contact with the second cam surface so as to follow the second cam surface from the intersection position of the first engagement portion and the second engagement portion to the terminating point of the engagement region (i.e. the position of the rear end of the first cam surface in the circumferential direction), and then continuously follows a cam surface of the following segment that is on the backward side of the second engagement portion. Thus, with the above configuration (1), the piston assembly transits smoothly from the preceding segment to the following segment.

(3) In the invention, each of the first cam surface and the second cam surface has a convex curved surface bulging toward the piston assembly.

With the above configuration (3), each of the first cam surface and the second cam surface has a convex surface bulging toward the piston assembly, and thus, as compared to a case in which the first cam surface and the second cam surface are formed by flat surfaces, the piston assembly can transit more smoothly from the preceding segment to the following segment.

(4) In the invention, a first tangent T₁ is closer to the piston assembly than a second tangent T₂ at a downstream side of a position P₀ with respect to a rotational direction of the ring cam, where the position P₀ is a position where the first cam surface and the second cam surface intersect with each other, the first tangent T₁ is a tangent to the first cam surface at the position P₀, and the second tangent T₂ is a tangent to the second cam surface at the position P₀.

With the above configuration (4), the first tangent T₁ to the first cam surface is closer to the piston assembly than the second tangent T₂ to the second cam surface at the downstream side of the position P₀ at which the first cam surface and the second cam surface intersect each other, with respect to the rotational direction of the ring cam, and thereby the piston assembly transits even more smoothly from the preceding segment to the following segment.

(5) In some embodiments, in any one of the above configurations (1) to (4), the first cam surface forms a continuous curved surface together with a cam surface of a portion of the preceding segment, the portion being disposed on a forward side of the first engagement portion.

With the above configuration (5), the first cam surface forms a continuous curved surface together with and a cam surface of a portion on a forward side of the first engagement portion on the preceding segment, and thereby the piston assembly smoothly follows the cam surface of the preceding segment including the first cam surface.

(6) In some embodiments, in any one of the above configurations (1) to (5), the second cam surface forms a continuous curved surface with a cam surface of a portion of the following segment, the portion being disposed on a backward side of the second engagement portion.

With the above configuration (6), the second cam surface forms a continuous curved surface together with a cam surface of a portion on a backward side of the second engagement portion on the following segment, and thereby the piston assembly smoothly follows the cam surface of the following segment including the second cam surface.

(7) In some embodiments, in any one of the above configurations (1) to (6), the first cam surface and the second cam surface intersect each other at a position in a range of from 0.3L₁ to 0.7L₁ with reference to a rear end of the first cam surface, where L₁ is a length of the first engagement portion in the circumferential direction.

With the above configuration (7), the first cam surface and the second cam surface intersect with each other at a position closer to the center of the first engagement portion with respect to the circumferential direction, and thereby it is possible to provide a large allowance range for misalignment in the relative positions of the first engagement portion and the second engagement portion in the circumferential direction or the radial direction. Thus, it is possible to provide an even larger machining tolerance for the cam segments, which facilitates fabrication of the ring cam even further.

(8) In some embodiments, in any one of the above configurations (1) to (7), the first cam surface and the second cam surface intersect each other at a position in a range of from 0.3L₂ to 0.7L₂ with reference to the front end of the second cam surface, where L₂ is a length of the second engagement portion in the circumferential direction.

With the above configuration (8), the first cam surface and the second cam surface intersect with each other at a position closer to the center of the second engagement portion with respect to the circumferential direction, and thereby it is possible to provide a large allowance range for misalignment in the relative positions of the first engagement portion and the second engagement portion in the circumferential direction or the radial direction. Thus, it is possible to provide an even larger machining tolerance for the cam segments, which facilitates fabrication of the ring cam even further.

(9) In some embodiments, in any one of the above configurations (1) to (8), the hydraulic machine further comprises a cylinder forming a working camber together with a piston of the piston assembly. The ring cam has a cam surface facing the piston assembly and including a working surface to be in contact with the piston assembly when a pressure of the working chamber is high, and a breathing surface to be in contact with the piston assembly when the pressure of the working chamber is low. The engagement region of the first engagement portion of the preceding segment and the second engagement portion of the following segment is within an extending region of the breathing surface.

With the above configuration (9), the engagement region of the first engagement portion and the second engagement portion is positioned within the extending region of the breathing surface, and thereby the piston assembly transits from the first cam surface of the first engagement portion to the second cam surface of the second engagement portion when the pressure of the working chamber is low. Thus, it is possible to relatively reduce shock due to collision between the piston assembly and the cam segments when the piston assembly transits from a cam segment to another, and to make the lifetime of the cam segments relatively long.

(10) In some embodiments, in the above configuration (9), the cam surface of the ring cam includes a plurality of top points which are closest to the piston assembly with respect to the radial direction and a plurality of bottom points which are farthest from the piston assembly with respect to the radial direction, the top points and the bottom points being arranged alternately in the circumferential direction. Each of the preceding segment and the following segment includes at least one of the top points and at least one of the bottom points.

With the above configuration (10), the preceding segment and the following segment each include at least one top point and at least one bottom point, and thereby it is possible to reduce the number into which the ring cam is divided (= the number of cam segments), and to form the engagement region of the preceding segment and the following segment on the breathing surface as described in the above (9).

(11) A ring cam for the hydraulic machine according to the invention comprises the features of claim 9.

With the above configuration (11), the first cam surface of the first engagement portion of the preceding segment, at the front end of the second cam surface of the second engagement portion of the following segment to be engaged with the first engagement portion, is disposed closer to the piston assembly than the second cam surface in the radial direction of the hydraulic machine, while the first cam surface and the second cam surface intersect each other in the engagement region of the first engagement portion and the second engagement portion. Specifically, when the piston assembly moves upstream in the rotational direction of the ring cam on the cam surface in accordance with the rotation of the rotor shaft, the piston assembly is in contact with the first cam surface from the start point of the engagement region (i.e., the position of the front end of the second cam surface in the circumferential direction) to the intersection point at which the first engagement portion and the second engagement portion intersect each other in the engagement region, and in contact with the second cam surface from the intersection point. Thus, with the above configuration (11), the piston assembly transits smoothly from the preceding segment to the following segment.

In the above configuration (11), the engagement region has a length in the circumferential direction of the rotor shaft. Thus, in the event of misalignment of relative positions of the first engagement portion and the second engagement portion in the circumferential direction or the radial direction, the position of intersection between the first cam surface and the second cam surface may become offset in the circumferential direction or the radial direction as much as the misalignment, but the smoothness of the transition of the piston assembly from a cam segment to another is less affected. Accordingly, with the above configuration (11), it is possible to provide a large machining tolerance for the cam segments, which facilitates fabrication of the ring cam.

(12) A renewable-energy type power generating apparatus according to at least one embodiment of the present invention comprises: a rotor configured to receive renewable energy to rotate; a hydraulic pump configured to be driven by the rotor to pressurize a working oil; a hydraulic motor configured to be driven by the working oil; and a generator configured to be driven by the hydraulic motor. At least one of the hydraulic pump or the hydraulic motor is the hydraulic machine according to any one of the above (1) to (10).

With the above configuration (12), the first cam surface of the first engagement portion of the preceding segment, at the front end of the second cam surface of the second engagement portion of the following segment to be engaged with the first engagement portion, is disposed closer to the piston assembly than the second cam surface in the radial direction of the hydraulic machine, while the first cam surface and the second cam surface intersect each other in the engagement region of the first engagement portion and the second engagement portion. Specifically, when the piston assembly moves upstream in the rotational direction of the ring cam on the cam surface in accordance with the rotation of the rotor shaft, the piston assembly is in contact with the first cam surface from the start point of the engagement region (i.e., the position of the front end of the second cam surface in the circumferential direction) to the intersection point at which the first engagement portion and the second engagement portion intersect each other in the engagement region, and in contact with the second cam surface from the intersection point. Thus, with the above configuration (12), the piston assembly transits smoothly from the preceding segment to the following segment.

In the above configuration (12), the engagement region has a length in the circumferential direction of the rotor shaft. Thus, in the event of misalignment of relative positions of the first engagement portion and the second engagement portion in the circumferential direction or the radial direction, the position of intersection between the first cam surface and the second cam surface may become offset in the circumferential direction or the radial direction as much as the misalignment, but the smoothness of the transition of the piston assembly from a cam segment to antoher is less affected. Accordingly, with the above configuration (12), it is possible to provide a large machining tolerance for the cam segments, which facilitates fabrication of the ring cam.

(13) In some embodiments, in the above configuration (12), the renewable-energy type power generating apparatus is configured to utilize wind energy as the renewable energy to generate electric power.

According to at least one embodiment of the present invention, provided is a hydraulic machine whereby piston assemblies can transit smoothly from a cam segment to another.

### BRIEF DESCRIPTION OF DRAWINGS

FIG. 1 is a schematic configuration diagram of a wind turbine power generating apparatus according to an embodiment.
FIG. 2 is a cross-sectional view of a hydraulic machine according to an embodiment, taken along a radial direction.
FIG. 3A is a cross-sectional view of cylinders and surrounding structures thereof in a hydraulic machine according to an embodiment.
FIG. 3B is a cross-sectional view of cylinders and surrounding structures thereof in a hydraulic machine according to an embodiment.
FIG. 4 is a schematic diagram of a configuration of a preceding segment and a following segment according to an embodiment.
FIG. 5 is an enlarged view as seen in the direction of a rotational axis, showing a configuration of a preceding segment and a following segment according to an embodiment.
FIG. 6 is a configuration diagram of a cam segment according to an embodiment.
FIG. 7 is a configuration diagram of a cam segment according to an embodiment.
FIG. 8 is a configuration diagram of a first cam surface and a second cam surface according to an embodiment.
FIG. 9 is a configuration diagram of a first cam surface and a second cam surface according to an embodiment.
FIG. 10 is a diagram for explaining an effect of a cam surface having a convex surface.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

In the following embodiment, a wind turbine power generating apparatus will be described as an example of application of a hydraulic machine or a hydraulic transmission. However, application of the hydraulic machine or the hydraulic transmission of the present invention may be other power generating apparatuses of renewable energy type such as a tidal current generator, an ocean current generator, and a river current generator, for instance, or may be other apparatuses such as a construction machine. That is, the application is not particularly limited.

Further, while the following description mainly describes a hydraulic machine including an outward cam (ring cam), the hydraulic machine may include an inward cam (ring cam), in case of which the embodiments of the present invention also include configurations obtained by reading the following description oppositely with regard to the directions where needed. Further, while the following description mainly describes a case in which it is the ring cam that rotates, in some embodiments the ring cam may be fixed and the cylinders and pistons may rotate.

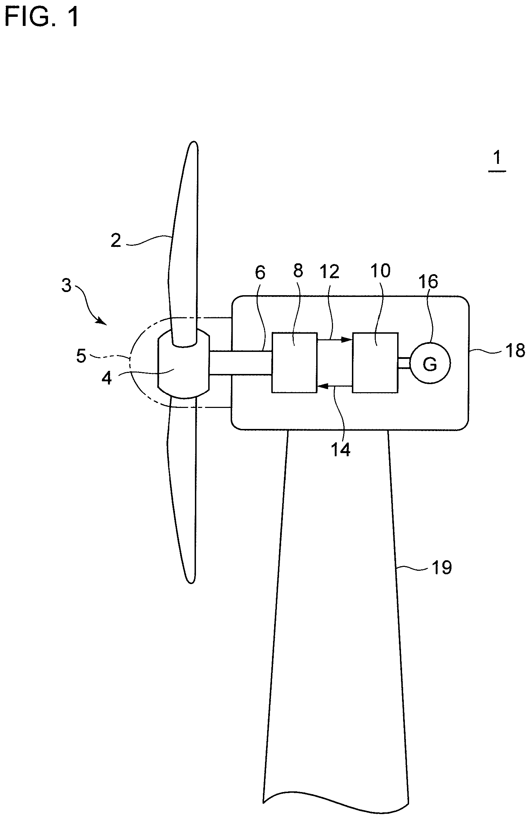

FIG. 1 is a schematic configuration diagram of a wind turbine power generating apparatus according to an embodiment. As depicted in the drawing, a wind turbine power generating apparatus 1 includes a rotor 3 including at least one blade 2 and a hub 4. The hub 4 may be covered with a hub cover (spinner) 5.

In an embodiment, a hydraulic pump 8 is coupled to the rotor 3 via a rotational shaft 6. A hydraulic motor 10 is connected to the hydraulic pump 8 via a high-pressure oil line 12 and a low-pressure oil line 14. Specifically, an outlet of the hydraulic pump 8 is connected to an inlet of the hydraulic motor 10 via the high-pressure oil line 12, and an inlet of the hydraulic pump 8 is connected to an outlet of the hydraulic motor 10 via the low-pressure oil line 14.

As the rotor 3 rotates in response to wind that serves as a renewable energy, the hydraulic pump 8 is driven by rotation of the rotor 3 to increase the pressure of working oil, thereby producing high-pressure working oil (pressurized oil). The pressurized oil produced by the hydraulic pump 8 is supplied to the hydraulic motor 10 via the high-pressure oil line 12, and drives the hydraulic motor 10. The low-pressure working oil having performed work in the hydraulic motor 10 is returned again to the hydraulic pump 8 via the low-pressure oil line 14 disposed between the outlet of the hydraulic motor 10 and the inlet of the hydraulic pump 8. In the present embodiment, the hydraulic pump 8 and the hydraulic motor 10 constitute a hydraulic transmission.

The generator 16 is connected to the hydraulic motor 10, and the hydraulic motor 10 drives the generator 16. In an embodiment, the generator 16 is a synchronous generator connected to a utility grid and driven by the hydraulic motor 10.

At least a part of the rotational shaft 6 is covered with a nacelle 18 disposed on a tower 19. In an embodiment, the hydraulic pump 8, the hydraulic motor 10, and the generator 16 are disposed inside the nacelle 18.

In some embodiments, at least one of the hydraulic pump 8 or the hydraulic motor 10 is a radial-piston type hydraulic machine described below.

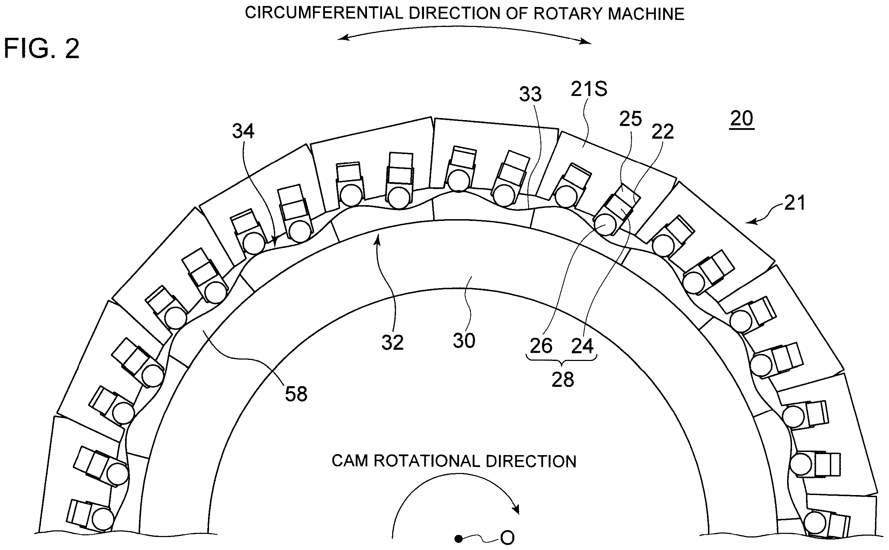

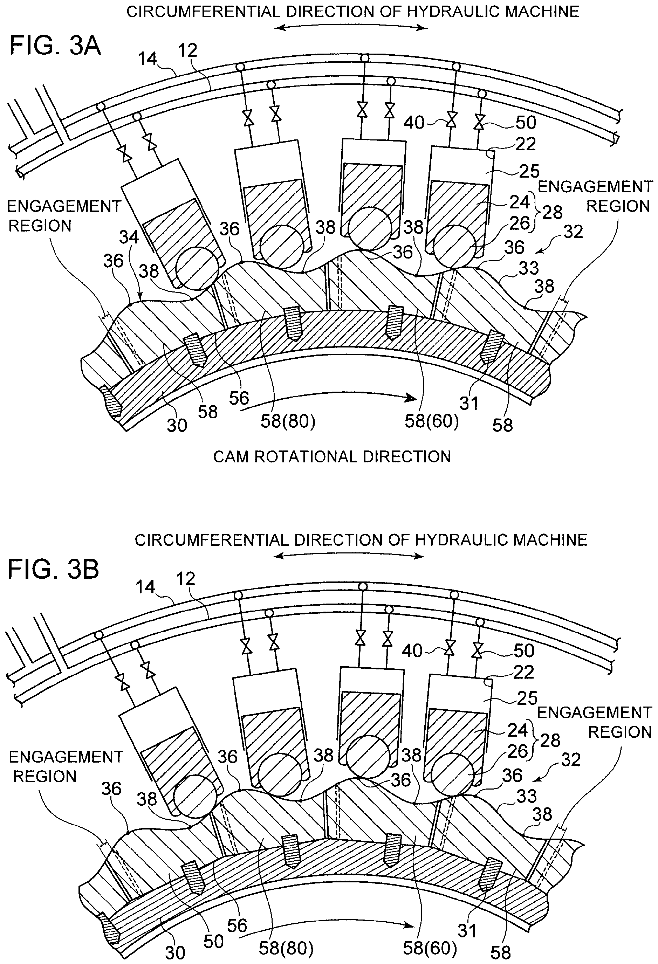

FIG. 2 is a cross-sectional view of a hydraulic machine according to an embodiment, taken along a radial direction. FIGs. 3A and 3B are each a cross-sectional view of cylinders and surrounding structures thereof in a hydraulic machine according to an embodiment.

The hydraulic machine 20 depicted in FIG. 2 includes a rotor shaft 30 extending in an axial direction of the hydraulic machine 20, a ring cam 32 extending in a circumferential direction of the hydraulic machine 20 and configured to rotate with the rotor shaft 30, and a plurality of piston assemblies 28. Each of the piston assemblies 28 includes a piston 24, and a roller 26 mounted to the piston 24. The hydraulic machine 20 further includes a plurality of cylinders 22, and each piston 24 is disposed inside a corresponding one of the plurality of cylinders 22.

In the exemplary embodiment depicted in FIGs. 2, 3A, and 3B, an outward cam (ring cam) 32 of an annular shape is disposed radially outside the rotor shaft 30, and the cylinders 22, the pistons 24, and the rollers 26 are disposed radially outside the outward cam 32. Here, an outward cam is a cam having a cam surface to be in contact with the rollers 26 on an outer side in the radial direction. In another embodiment, an inward cam (ring cam) 32 of an annular shape is disposed radially inside the rotor shaft 30, and the cylinders 22, the pistons 24, and the rollers 26 are disposed radially inside the inward cam 32. Here, an inward cam is a cam having a cam surface to be in contact with the rollers 26 on an inner side in the radial direction.

The plurality of cylinders 22 are arranged in the circumferential direction of the hydraulic machine 20, inside a cylinder block 21. The cylinder block 21 may be divided into a plurality of segments 21S in the circumferential direction of the hydraulic machine 20.

Each piston 24 is disposed slidably inside a corresponding one of the cylinders 22. Each piston 24 is guided by the corresponding cylinder 22, so as to reciprocate between a bottom dead center and a top dead center along a center shaft of the cylinder 22. As a result of the reciprocating motion of the piston 24, the capacity of the working chamber 25 surrounded by the corresponding cylinder 22 and the corresponding piston 24 changes periodically.

The mode of motion is converted between such reciprocating motion of the pistons 24 accompanied by the periodical capacity change of the working chambers 25 and the rotational motion of the ring cam 32.

For instance, in a case where the hydraulic machine 20 is the hydraulic pump 8, the rotational motion of the ring cam 32 rotating with the rotor shaft 30 of the hydraulic machine 20 is converted into the reciprocating motion of the pistons 24, so that the cyclic volume change of the working chambers 25 takes place and high-pressure working oil (pressurized oil) is produced in the working chambers 25. In contrast, in a case where the hydraulic machine 20 is the hydraulic motor 10, pressurized oil is introduced into the working chambers 25 to cause reciprocating motion of the pistons 24, and the reciprocating motion is converted into the rotational motion of the ring cam 32, so that the rotor shaft 30 of the hydraulic machine 20 rotates with the ring cam 32.

In this way, as a result of the function of the ring cam 32, energy is converted between the rotational energy (mechanical energy) of the rotor shaft 30 of the hydraulic machine 20 and the fluid energy of the working oil, so that the hydraulic machine 20 performs the predetermined function as the hydraulic pump 8 or the hydraulic motor 10.

Each of the rollers 26 is engaged rotatably with a corresponding one of the pistons 24, and is in contact with a cam surface 33 of the ring cam 32. When the ring cam 32 rotates about a cam center O (center axis of the hydraulic machine 20) together with the rotor shaft 30, each of the rollers 26 runs on the cam surface 33 of the ring cam 32 while rotating.

The cam surface 33 of the ring cam 32 is formed by a plurality of robes 34 arranged along the circumferential direction of the hydraulic machine 20. Each of the robes 34 protrudes toward the cylinders 22. Each robe 34 is formed by a smooth curve passing through a pair of bottom points 38 and one top point 36 disposed between the pair of bottom points 38. The top points 36 and the bottom points 38 of the robes 34 are positioned on the cam surface 33 where the distance from the rotation axis O of the hydraulic machine 20 is the maximum or the minimum, and the top points 36 are disposed closer to the cylinders 22 than the bottom points 38 are to the cylinder 22. The top points 36 of the robes 34 are points on the cam surface 33 corresponding to the top dead center in a period of the reciprocating motion of the pistons 24. The bottom points 38 of the robes 34 are points on the cam surface 33 corresponding to the bottom dead center in a period of the reciprocating motion of the pistons 24.

In the exemplary embodiment depicted in FIGs. 2, 3A, and 3B, the cylinders 22 are disposed radially outside the outward cam 32. The distance (cam diameter) from the center axis (rotation axis of the hydraulic machine 20) O of the outward cam 32 reaches its maximum at the top points 36 of the robes 34, and its minimum at the bottom points 38 of the robes 34. In contrast, in another embodiment in which the cylinders 22 are disposed radially inside an inward cam, the distance from the center axis O of the inward cam to the cam surface 33 reaches its minimum at the top point 36 of the robe 34, and its maximum at the bottom points 38 of the robes 34. At the top point 36 and the bottom points 38 of each robe 34, the normal line to the cam surface 33 is in the same direction as the radial direction of the hydraulic machine 20.

In some embodiments, as depicted in FIGs. 3A and 3B, the hydraulic machine 20 further includes a low-pressure valve 40 disposed between the low-pressure oil line 14 and each of the working chambers 25, and a high-pressure valve 50 disposed between the high-pressure oil line 12 and each of the working chambers 25.

If the hydraulic machine 20 is a hydraulic pump, the low-pressure valve 40 is used to supply the working chambers 25 with low-pressure working oil from the low-pressure oil line 14, and the high-pressure valve 50 is used to supply the high-pressure oil line 12 with high-pressure working oil produced in the working chambers 25.

If the hydraulic machine 20 is a hydraulic motor, the high-pressure valve 50 is used to supply the working chamber 25 with high-pressure working oil from the high-pressure oil line 12, and the low-pressure valve 40 is used to discharge working oil having performed work in the working chamber to the low-pressure oil line.

In some embodiments, as depicted in FIGs. 2, 3A, and 3B, the ring cam 32 includes a plurality of cam segments 58 arranged in the circumferential direction of the hydraulic machine 20. At least one pair of adjacent cam segments (60, 60) among the plurality of cam segments 58 includes a preceding segment 60 and a following segment 80 described below. The following segment 80 is a cam segment 58 that is subsequent to the preceding segment 60 in the rotational direction of the ring cam 32.

In an embodiment, a facing surface 56 of each segment 58 that faces the rotor shaft 30 is formed by an arc-shaped curved surface as depicted in FIG. 3A. In this case, the outer peripheral surface of the rotor shaft 30 has a circular shape as seen in the direction of the rotational axis.

Alternatively, in an embodiment, a facing surface 56 of each segment 58 that faces the rotor shaft 30 is formed by a flat surface as depicted in FIG. 3B. In this case, the outer peripheral surface of the rotor shaft 30 has a polygonal shape as seen in the direction of the rotational axis. As described above, with the facing surfaces 56 formed by flat surfaces, each cam segment 58 can be produced readily.

Furthermore, each cam segment 58 may be mounted to the rotor shaft 30 via a fixing member 31 such as a bolt, a key, and a pin.

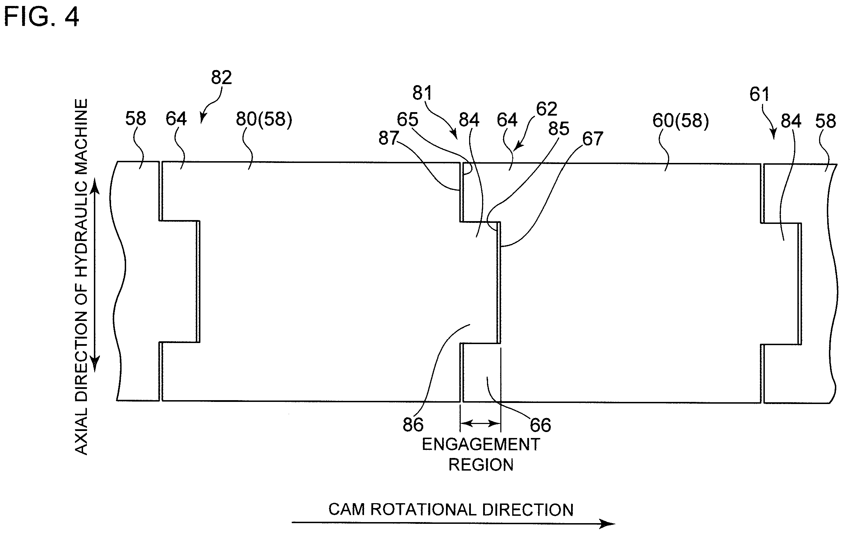

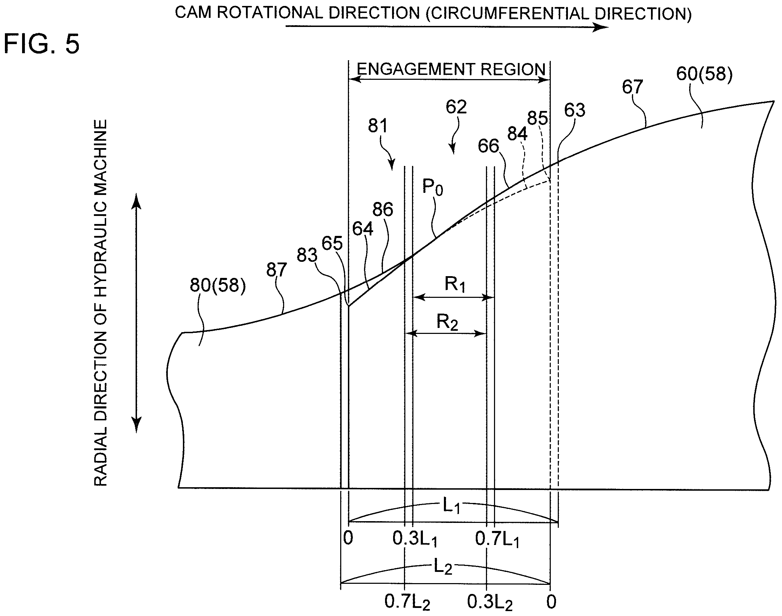

FIG. 4 is a schematic diagram of a configuration of the preceding segment 60 and the following segment 80 according to an embodiment. FIG. 5 is an enlarged view as seen in the direction of a rotational axis, showing an engagement region of the preceding segment 60 and the following segment 80 according to an embodiment. FIG. 4 is a view of the preceding segment 60 and the following segment 80, as seen inward in the radial direction of the rotor shaft 30.

As depicted in FIGs. 4 and 5, the preceding segment 60 has the first engagement portion 64 protruding toward the following segment 80 at a trailing end portion 62 of the preceding segment 60. Furthermore, the following segment 80 has the second engagement portion 84 protruding toward the preceding segment 60 at a leading end portion 81 of the following segment 80 to be in engagement with the first engagement portion of the preceding segment 60.

That is, the first engagement portion 64 of the preceding segment 60 and the second engagement portion 84 of the following segment 80 are engaged with each other in the engagement region.

Furthermore, as depicted in FIGs. 4 and 5, the first engagement portion 64, at the trailing end portion 62 of the preceding segment 60, has the first cam surface 66 facing the rollers 26 (piston assemblies 28). Furthermore, the second engagement portion 84, at the leading end portion 81 of the following segment 80, has the second cam surface 86 facing the rollers 26 (piston assemblies 28).

Furthermore, as depicted in FIG. 5, the first cam surface 66, at the front end 85 of the second cam surface 86, is disposed closer to the piston assemblies 28 than the second cam surface 86 in the radial direction of the hydraulic machine 20, while the first cam surface 66 and the second cam surface 86 intersect with each other in the engagement region between the first engagement portion 64 and the second engagement portion 84.

In FIG. 5, the first cam surface 66 and the second cam surface 86 intersect with each other at position P₀, in the engagement region between the first engagement portion 64 and the second engagement portion 84.

In the above described hydraulic machine 20, when the rollers 26 (piston assemblies 28) move upstream in the rotational direction of the ring cam 32 on the cam surface 33 in accordance with the rotation of the rotor shaft 30, the rollers 26 are in contact with the first cam surface 66 from the start point of the engagement region (i.e., the position of the front end 85 of the second cam surface 86 in the circumferential direction) to the intersection position P₀ at which the first engagement portion 64 and the second engagement portion 84 intersect with each other in the engagement region, and in contact with the second cam surface 86 from the intersection position P₀. Thus, according to the above described hydraulic machine 20, the rollers 26 transit smoothly from the preceding segment 60 to the following segment 80.

The engagement region has a length in the circumferential direction of the rotor shaft 30. Thus, if the relative positions of the first engagement portion 64 and the second engagement portion 84 are misaligned in the circumferential direction or the radial direction, the intersection position P₀ of the first cam surface 66 and the second cam surface 86 becomes offset in the circumferential direction or the radial direction as much as the misalignment, but the smoothness of the transition of the rollers 26 from the preceding segment 60 to the following segment 80 is less affected. Accordingly, it is possible to provide a large machining tolerance for the cam segments 58 including the preceding segment 60 and the following segment 80, which makes it possible to produce the ring cam 32 readily.

In some embodiments, as depicted in FIG. 5, the second cam surface 86, at the rear end 65 of the first cam surface 66, is disposed closer to the piston assemblies 28 than the first cam surface 66 with respect to the radial direction of the hydraulic machine 20. With this hydraulic machine 20, the rollers 26 (piston assemblies 28) come into contact with the second cam surface 86 so as to follow the second cam surface 86 from the intersection position P₀ of the first engagement portion 64 and the second engagement portion 84 to the terminating point of the engagement region (i.e. the position of the rear end 65 of the first cam surface 66 in the circumferential direction), and continuously follows a cam surface 87 of the following segment 80 that is on the backward side of the second engagement portion 84. Thus, the rollers 26 (piston assemblies 28) transit smoothly from the preceding segment 60 to the following segment 80.

Furthermore, the preceding segment 60 depicted in FIG. 4 may further have the second engagement portion 84, at a leading end portion 61 of the preceding segment 60, protruding toward a cam segment 58 on the forward side (downstream in the cam rotational direction) of the preceding segment 60 to be in engagement with the cam segment 58. Furthermore, the following segment 80 may further have the first engagement portion 64, at a trailing end portion 82 of the following segment 80, protruding toward a cam segment 58 on the backward side (upstream in the cam rotational direction) of the following segment 80 to be in engagement with the cam segment 58.

Accordingly, each cam segment 58 includes both the first engagement portion 64 and the second engagement portion 84, and thus it is possible to engage adjacent two cam segments 58 with each other in the plurality of cam segments 58 arranged in the circumferential direction.

In some embodiments, as depicted in FIG. 5, the first cam surface 66 of the preceding segment 60 forms a continuous curved surface with the cam surface 67 of a portion on the forward side of the first engagement portion 64 of the preceding segment 60. Herein, the portion on the forward side of the first engagement portion 64 of the preceding segment 60 refers to a portion of the preceding segment 60, disposed on the forward side (downstream in the cam rotational direction) of the front end 63 of the first engagement portion 64.

As described above, in the preceding segment 60, the first cam surface 66 and the cam surface 67 of a portion on the forward side of the first engagement portion form a continuous curved surface, and thereby it is possible for the rollers 26 (piston assemblies 28) to smoothly follow the cam surface of the preceding segment 60 including the first cam surface 66.

In some embodiments, as depicted in FIG. 5, the second cam surface 86 of the following segment 80 forms a continuous curved surface with the cam surface 87 of a portion on the backward side of the second engagement portion 84 of the following segment 80. Herein, a portion on the backward side of the second engagement portion 84 of the following segment 80 is a portion of the following segment 80, disposed on the backward side (upstream in the cam rotational direction) of the rear end 83 of the second cam surface 86.

As described above, in the following segment 80, the second cam surface 86 and the cam surface 87 of a portion on the backward side of the second engagement portion form a continuous curved surface, and thereby it is possible for the rollers 26 (piston assemblies 28) to smoothly follow the cam surface of the following segment 80 including the second cam surface 86.

In some embodiments, when the length in the circumferential direction of the first engagement portion 64 (i.e., the length in the circumferential direction from the front end 63 to the rear end 65 of the first cam surface 66) is L₁, the first cam surface 66 and the second cam surface 86 intersect with each other within a range of from 0.3L, to 0.7L₁ with reference to the rear end 65 of the first cam surface 66.

For instance, in the embodiment depicted in FIG. 5, when the length in the circumferential direction of the first engagement portion 64 is L₁, the intersection position P₀ between the first cam surface 66 and the second cam surface 86 is within a range of from 0.3L₁ to 0.7L₁ with reference to the rear end 65 of the first cam surface 66.

Furthermore, in some embodiments, when the length in the circumferential direction of the second engagement portion 84 (i.e., the length in the circumferential direction from the front end 85 to the rear end 83 of the second cam surface 86) is L₂, the first cam surface 66 and the second cam surface 86 intersect with each other within a range of from 0.3L₂ to 0.7L₂ with reference to the front end 85 of the second cam surface 86.

For instance, in the embodiment depicted in FIG. 5, when the length in the circumferential direction of the second engagement portion 84 is L₂, the intersection position P₀ between the first cam surface 66 and the second cam surface 86 is within a range of from 0.3L₂ to 0.7L₂ with reference to the front end 85 of the second cam surface 86.

In the above embodiment, for the first cam surface 66 and the second cam surface 86 intersect with each other at a position closer to the center of the first engagement portion 64 with respect to the circumferential direction, or, for the first cam surface 66 and the second cam surface 86 intersect with each other at a position closer to the center of the second engagement portion 84 with respect to the circumferential direction, it is possible to provide a large allowance range for misalignment in the relative positions of the first engagement portion 64 and the second engagement portion 84 in the circumferential direction or the radial direction. Accordingly, it is possible to provide an even larger machining tolerance for the cam segments 58 including the preceding segment 60 and the following segment 80, which makes it possible to produce the ring cam 32 even more readily.

In some embodiments, the cam surface 33 facing the rollers 26 (piston assemblies 28) of the ring cam 32 includes a working surface that comes into contact with the rollers 26 when the pressure of the working chambers 25 is high, and a breathing surface that comes into contact with the rollers 26 (piston assemblies) when the pressure of the working chambers 25 is low. The engagement region between the first engagement portion 64 of the preceding segment 60 and the second engagement portion 84 of the following segment 80 is in an extending region of the breathing surface.

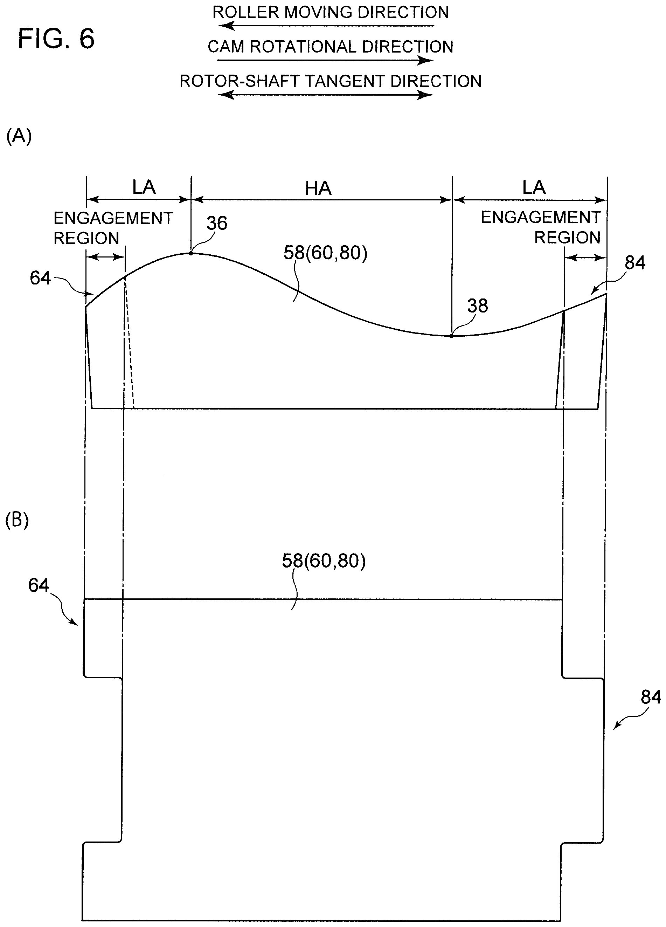

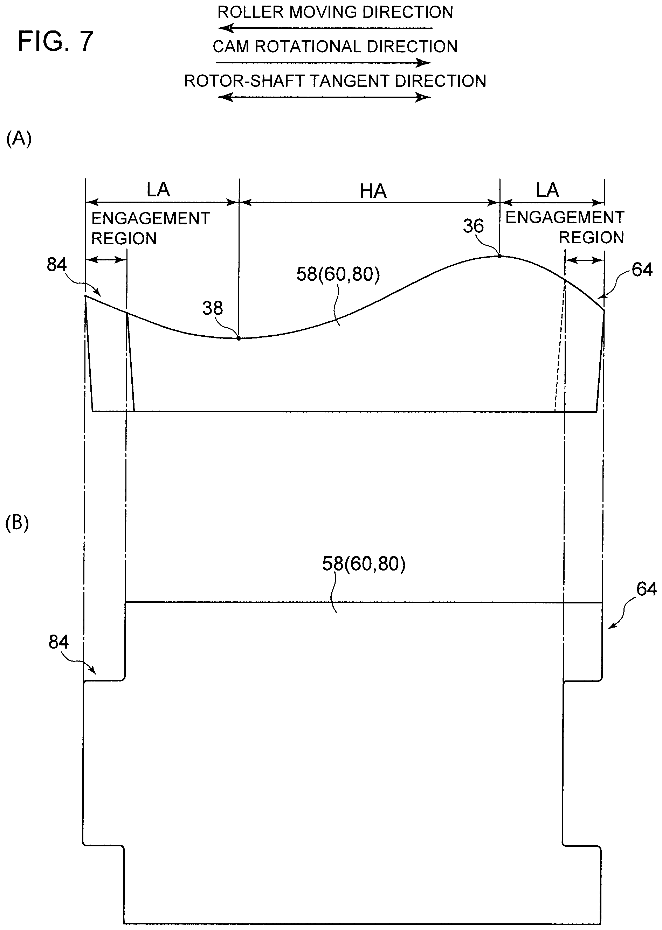

FIGs. 6 and 7 are each a configuration diagram of the cam segment 58 according to an embodiment, where (A) is a side view and (B) is a top view.

For instance, if the hydraulic machine 20 is a hydraulic pump, the low-pressure valve 40 opens and the high-pressure valve 50 closes while the piston 24 moves from the top dead center to the bottom dead center, and thereby the working chamber 25 is supplied with low-pressure working oil. Accordingly, the cam surface to be in contact with the roller 26 while the piston 24 moves from the top dead center to the bottom dead center is a cam surface of a low-pressure region (LA), which is the breathing surface. Furthermore, the high-pressure valve 50 opens and the low-pressure valve 40 closes while the piston 24 moves from the bottom dead center to the top dead center, and thereby working oil is pressurized in the working chamber 25 and high-pressure working oil is produced. Accordingly, the cam surface to be in contact with the roller 26 while the piston 24 moves from the bottom dead center to the top dead center is a cam surface of a high-pressure region (HA), which is the working surface.

In some embodiments, if the hydraulic machine 20 is a hydraulic pump, the cam segment 58 depicted in FIG. 6 may be employed as the preceding segment 60 and the following segment 80. The cam segment 58 depicted in FIG. 6 includes a top point 36 closest to the piston assemblies 28 with respect to the radial direction of the hydraulic machine 20, and a bottom point 38 furthest from the piston assemblies 28 with respect to the radial direction of the hydraulic machine 20.

If the ring cam 32 includes more than one cam segment 58 depicted in FIG. 6 arranged in the circumferential direction, an engagement region is formed on the breathing surface which is a region on the cam surface to be in contact with the roller 26 while the piston 24 moves from the top dead center to the bottom dead center.

Furthermore, for instance, if the hydraulic machine 20 is a hydraulic motor, the high-pressure valve 50 opens and the low-pressure valve 40 closes while the piston 24 moves from the top dead center to the bottom dead center, and thereby the working chamber 25 is supplied with high-pressure working oil, thus converting motion of the piston 24 into rotational motion of the ring cam 32. Accordingly, the cam surface to be in contact with the roller 26 while the piston 24 moves from the top dead center to the bottom dead center is a cam surface of a high-pressure region (HA), which is the working surface. Furthermore, the low-pressure valve 40 opens and the high-pressure valve 50 closes while the piston 24 moves from the bottom dead center to the top dead center, and thereby low-pressure working oil having performed work is discharged from the working chamber 25. Accordingly, the cam surface to be in contact with the roller 26 while the piston 24 moves from the bottom dead center to the top dead center is a cam surface of a low-pressure region (LA), which is the breathing surface.

In some embodiments, if the hydraulic machine 20 is a hydraulic motor, the cam segment 58 depicted in FIG. 7 may be employed as the preceding segment 60 and the following segment 80. The cam segment 58 depicted in FIG. 7 includes a top point 36 closest to the piston assemblies 28 with respect to the radial direction of the hydraulic machine 20, and a bottom point 38 furthest from the piston assemblies 28 with respect to the radial direction of the hydraulic machine 20.

If the ring cam 32 includes more than one cam segment 58 depicted in FIG. 7 arranged in the circumferential direction, an engagement region is formed on the breathing surface which is a region on the cam surface to be in contact with the roller 26 while the piston 24 moves from the bottom dead center to the top dead center.

As described above, with the engagement region of the first engagement portion 64 and the second engagement portion 84 positioned within the extending region of the breathing surface, the roller 26 (piston assembly 28) transits from the first cam surface 66 of the first engagement portion 64 to the second cam surface 86 of the second engagement portion 84 when the pressure of the working chamber 25 is low. Thus, it is possible to relatively reduce shock due to collision between the roller 26 and the preceding segment 60 and the following segment 80 when the roller 26 transits from the preceding segment 60 to the following segment 80. Accordingly, it is possible to make the lifetime of the preceding segment 60 and the following segment 80 relatively long.

In some embodiments, the cam surface 33 of the ring cam 32 includes a plurality of top points 36 and a plurality of bottom points 38, which are alternately arranged in the circumferential direction. Specifically, the ring cam 32 is a multi-lobed cam including a plurality of lobes. Furthermore, the preceding segment 60 and the following segment 80 each include at least one top point 36 and at least one bottom point 38.

For instance, the hydraulic machine 20 depicted in FIG. 3A or 3B includes the ring cam 32, the preceding segment 60, and the following segment 80 described above.

Accordingly, with the preceding segment 60 and the following segment 80 each including at least one top point 36 and at least one bottom point 38, it is possible to reduce the number into which the ring cam 32 is divided (= the number of cam segments 58), and to form the engagement region of the preceding segment 60 and the following segment 80 on the above described breathing surface.

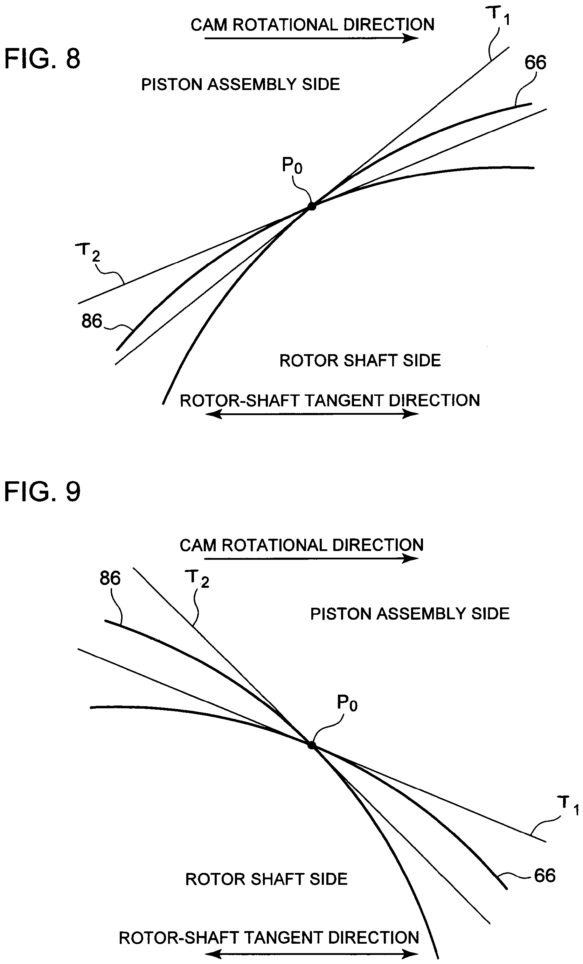

FIGs. 8 and 9 are each a configuration diagram around an intersection of a first cam surface and a second cam surface according to an embodiment. In the embodiment depicted in FIG. 8, an engagement region between the first engagement portion 64 and the second engagement portion 84 is located in a region of a cam surface where the roller 26 moves from the top point 36 toward the bottom point 38 (i.e. a region where the piston 24 moves from the top dead center toward the bottom dead center). Furthermore, in the embodiment depicted in FIG. 9, an engagement region of the first engagement portion 64 and the second engagement portion 84 is located in a region of a cam surface where the roller 26 moves from the bottom point 38 toward the top point 36 (i.e. a region where the piston 24 moves from the bottom dead center toward the top dead center).

In some embodiments, as depicted in FIGs. 8 and 9, each of the first cam surface 66 of the first engagement portion 64 and the second cam surface 86 of the second engagement portion 84 has a convex curved surface protruding toward the piston assembly 28. In this case, as compared to a case in which the first cam surface 66 and the second cam surface 86 are formed from flat surfaces, the piston assembly 28 can transit from the preceding segment 60 to the following segment 80 even more smoothly.

The reason for this is as follows.

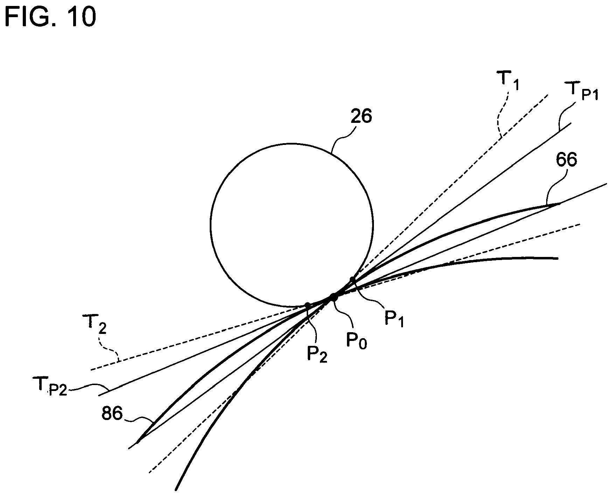

FIG. 10 is a diagram for explaining an effect of a cam surface having a convex curved surface, showing a structure similar to that around the intersection between the first cam surface and the second cam surface depicted in FIG. 8.

As depicted in FIG. 10, when the roller 26 passes by the vicinity of the intersection position P₀ between the first cam surface 66 and the second cam surface 86, both being a convex curved surface, the roller 26 does not actually comes into contact with the intersection position P₀ but comes into contact with the first cam surface 66 and the second cam surface 86 at positions P₁ and P₂ slightly away from the intersection position P₀, respectively, because the convex curved surfaces intersect each other at the intersection position P₀.

Herein, as it can be seen from FIG. 10, the difference between the gradient of the tangent T_{P1} to the first cam surface 66 at position P₁ and the gradient of the tangent T_{P2} to the second cam surface 86 at position P₂ is smaller than the difference between the gradient of the tangent T₁ to the first cam surface 66 at the intersection position P₀ and the gradient of the tangent T₂ to the second cam surface 86 at the intersection position P₀. Thus, if the first cam surface 66 and the second cam surface 86 are formed by convex curved surfaces, as compared to a case in which the first cam surface 66 and the second cam surface 86 are formed by flat surfaces, the piston assembly 28 can transit from the preceding segment 60 to the following segment 80 smoothly.

In some embodiments, as depicted in FIGs. 8 and 9, when the first tangent T₁ is the tangent to the first cam surface 66 at the position P₀ where the first cam surface 66 and the second cam surface 86 intersect with each other, and the second tangent T₂ is the tangent to the second cam surface 86 at the position P₀, the first tangent T₁ is closer to the piston assembly 28 than the second tangent T₂, at the downstream side of the position P₀ in the rotational direction of the ring cam 32.

As described above, since the first tangent T₁ to the first cam surface 66 is closer to the piston assembly 28 than the second tangent T₂ of the second cam surface 86 at the downstream side of the intersection position P₀ of the first cam surface 66 and the second cam surface 86 with respect to the rotational direction of the ring cam 32, the piston assembly 28 can transit even more smoothly from the preceding segment 60 to the following segment 80.

Embodiments of the present invention were described in detail above, but the present invention is not limited thereto, and various amendments and modifications may be implemented, as long as they fall within the scope protection defined by the respective subject-matter of the patent claims.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A hydraulic machine (20) of a radial-piston type, comprising:
a rotor shaft (30) extending in an axial direction of the hydraulic machine (20);
a ring cam (32) extending in a circumferential direction of the hydraulic machine (20) and configured to rotate together with the rotor shaft (30); and
a piston assembly (28) configured to perform reciprocating motion in accordance with rotation of the ring cam (32),
wherein the ring cam (32) comprises a plurality of cam segments (58,60,80) arranged in the circumferential direction,
wherein at least one adjacent pair of the plurality of cam segments (58,60,80) includes a preceding segment (60) and a following segment (80) disposed subsequent to the preceding segment (60) in a rotational direction of the ring cam (32),
wherein the preceding segment (60) has a first engagement portion (64) protruding toward the following segment (80) at a trailing end portion of the preceding segment (60),
wherein the following segment (80) has a second engagement portion (84) protruding toward the preceding segment (60) at a leading end portion of the following segment (80) and being engageable with the first engagement portion (64) of the preceding segment (60),
wherein the first engagement portion (64) has a first cam surface (66) in the trailing end portion of the preceding segment (60), the first cam surface (66) facing the piston assembly (28), and the second engagement portion (84) has a second cam surface (86) in the front end portion of the following segment (80), the second cam surface (86) facing the piston assembly (28), the first cam surface (66) being disposed closer to the piston assembly (28) than the second cam surface (86) with respect to a radial direction of the hydraulic machine (20) at a front end of the second cam surface (86),
wherein the first cam surface (66) and the second cam surface (86) intersect each other in an engagement region of the first engagement portion (64) and the second engagement portion (84), and
wherein each of the first cam surface (66) and the second cam surface (86) has a convex curved surface bulging toward the piston assembly (28),
**characterized in that**
a first tangent T₁ is closer to the piston assembly (28) than a second tangent T₂ at a downstream side of a position P₀ with respect to a rotational direction of the ring cam (32), where the position P₀ is a position where the first cam surface (66) and the second cam surface (86) intersect with each other, the first tangent T₁ is a tangent to the first cam surface (66) at the position P₀, and the second tangent T₂ is a tangent to the second cam surface (86) at the position P₀.

2. The hydraulic machine (20) according to claim 1,
wherein the second cam surface (86) is disposed closer to the piston assembly (28) than the first cam surface (66) with respect to the radial direction of the hydraulic machine (20), at a rear end of the first cam surface (66).

3. The hydraulic machine (20) according to claim 1 or 2,
wherein the first cam surface (66) forms a continuous curved surface together with a cam surface (67) of a portion of the preceding segment (60), the portion being disposed on a forward side of the first engagement portion (64).

4. The hydraulic machine (20) according to any one of claims 1 to 3,
wherein the second cam surface (86) forms a continuous curved surface with a cam surface (87) of a portion of the following segment (80), the portion being disposed on a backward side of the second engagement portion (84).

5. The hydraulic machine (20) according to any one of claims 1 to 4,
wherein the first cam surface (66) and the second cam surface (86) intersect each other at a position in a range of from 0.3L₁ to 0.7L₁ with reference to a rear end of the first cam surface (66), where L₁ is a length of the first engagement portion (64) in the circumferential direction.

6. The hydraulic machine (20) according to any one of claims 1 to 5,
wherein the first cam surface (66) and the second cam surface (86) intersect each other at a position in a range of from 0.3L₂ to 0.7L₂ with reference to the front end of the second cam surface (86), where L₂ is a length of the second engagement portion (84) in the circumferential direction.

7. The hydraulic machine (20) according to any one of claims 1 to 6, further comprising:
a cylinder (22) forming a working camber together with a piston (24) of the piston assembly (28),
wherein the ring cam (32) has a cam surface facing the piston assembly (28) and including a working surface to be in contact with the piston assembly (28) when a pressure of the working chamber is high, and a breathing surface to be in contact with the piston assembly (28) when the pressure of the working chamber is low, and
wherein the engagement region of the first engagement portion (64) of the preceding segment (60) and the second engagement portion (84) of the following segment (80) is within an extending region of the breathing surface.

8. The hydraulic machine (20) according to claim 7,
wherein the cam surface of the ring cam (32) includes a plurality of top points (36) which are closest to the piston assembly (28) with respect to the radial direction and a plurality of bottom points (38) which are farthest from the piston assembly (28) with respect to the radial direction, the top points (36) and the bottom points (38) being arranged alternately in the circumferential direction, and
wherein each of the preceding segment (60) and the following segment (80) includes at least one of the top points (36) and at least one of the bottom points (38).

9. A ring cam (32) for a hydraulic machine (2) of a radial-piston type including a rotor shaft (30) extending in an axial direction of the hydraulic machine (20), and a piston assembly (28) configured to perform reciprocating motion in accordance with rotation of the ring cam (32), wherein the ring cam (32) is configured to extend in a circumferential direction of the hydraulic machine (20) and to rotate together with the rotor shaft (30), the ring cam (32) comprising:
a plurality of cam segments (58,60,80) arranged in the circumferential direction,
wherein at least one adjacent pair of the plurality of cam segments (58,60,80) includes a preceding segment (60) and a following segment (80) disposed subsequent to the preceding segment (60) in a rotational direction of the ring cam (32),
wherein the preceding segment (60) has a first engagement portion (64) protruding toward the following segment (80) at a trailing end portion of the preceding segment (60),
wherein the following segment (80) has a second engagement portion (84) protruding toward the preceding segment (60) at a leading end portion of the following segment (80) and being engageable with the first engagement portion (64) of the preceding segment (60),
wherein the first engagement portion (64) has a first cam surface (66) in the trailing end portion of the preceding segment (60), the first cam surface (66) facing the piston assembly (28), and the second engagement portion (84) has a second cam surface (86) in the front end portion of the following segment (80), the second cam surface (86) facing the piston assembly (28), the first cam surface (66) being disposed closer to the piston assembly (28) than the second cam surface (86) with respect to a radial direction of the hydraulic machine (20) at a front end of the second cam surface (86),
wherein the first cam surface (66) and the second cam surface (86) intersect each other in an engagement region of the first engagement portion (64) and the second engagement portion (84), and
wherein each of the first cam surface (66) and the second cam surface (86) has a convex curved surface bulging toward the piston assembly (28),
**characterized in that**
a first tangent T₁ is closer to the piston assembly (28) than a second tangent T₂ at a downstream side of a position P₀ with respect to a rotational direction of the ring cam (32), where the position P₀ is a position where the first cam surface (66) and the second cam surface (86) intersect with each other, the first tangent T₁ is a tangent to the first cam surface (66) at the position P₀, and the second tangent T₂ is a tangent to the second cam surface (86) at the position P₀.

10. A renewable-energy type power generating apparatus (1), comprising:
a rotor (3) configured to receive renewable energy to rotate;
a hydraulic pump (8) configured to be driven by the rotor (3) to pressurize a working oil;
a hydraulic motor (10) configured to be driven by the working oil; and
a generator (16) configured to be driven by the hydraulic motor (10),
wherein at least one of the hydraulic pump (8) or the hydraulic motor (10) is the hydraulic machine (20) according to any one of claims 1 to 8.

11. The renewable-energy type power generating apparatus (1) according to claim 10, configured to utilize wind energy as the renewable energy to generate electric power.

## Patentansprüche

1. Eine hydraulische Maschine (20) vom Radialkolbentyp, umfassend:
eine Rotorwelle (30), die sich in einer axialen Richtung der hydraulischen Maschine (20) erstreckt,
einen Ringnocken (32), der sich in einer Umfangsrichtung der hydraulischen Maschine (20) erstreckt und konfiguriert ist, um sich zusammen mit der Rotorwelle (30) zu drehen, und
eine Kolbenanordnung (28), die konfiguriert ist, um eine hin- und hergehende Bewegung in Übereinstimmung mit der Drehung des Ringnockens (32) auszuführen,
wobei der Ringnocken (32) eine Vielzahl von Nockensegmenten (58,60,80) umfasst, die in der Umfangsrichtung angeordnet sind,
wobei mindestens ein benachbartes Paar der Vielzahl von Nockensegmenten (58,60,80) ein vorausgehendes Segment (60) und ein nachfolgendes Segment (80), das in einer Drehrichtung des Ringnockens (32) nach dem vorausgehenden Segment (60) angeordnet ist, umfasst,
wobei das vorausgehende Segment (60) einen ersten Eingriffsabschnitt (64) aufweist, der an einem hinteren Endabschnitt des vorausgehenden Segments (60) in Richtung des nachfolgenden Segments (80) vorsteht,
wobei das nachfolgende Segment (80) einen zweiten Eingriffsabschnitt (84) aufweist, der an einem vorderen Endabschnitt des nachfolgenden Segments (80) in Richtung des vorausgehenden Segments (60) vorsteht und mit dem ersten Eingriffsabschnitt (64) des vorausgehenden Segments (60) in Eingriff bringbar ist,
wobei der erste Eingriffsabschnitt (64) eine erste Nockenoberfläche (66) in dem hinteren Endabschnitt des vorausgehenden Segments (60) aufweist, wobei die erste Nockenoberfläche (66) der Kolbenanordnung (28) zugewandt ist, und der zweite Eingriffsabschnitt (84) eine zweite Nockenoberfläche (86) in dem vorderen Endabschnitt des nachfolgenden Segments (80) aufweist, wobei die zweite Nockenoberfläche (86) der Kolbenanordnung (28) zugewandt ist, wobei die erste Nockenoberfläche (66) näher an der Kolbenanordnung (28) angeordnet ist als die zweite Nockenoberfläche (86) in Bezug auf eine radiale Richtung der hydraulischen Maschine (20) an einem vorderen Ende der zweiten Nockenoberfläche (86),
wobei die erste Nockenoberfläche (66) und die zweite Nockenoberfläche (86) einander in einem Eingriffsbereich des ersten Eingriffsabschnitts (64) und des zweiten Eingriffsabschnitts (84) schneiden, und
wobei sowohl die erste Nockenoberfläche (66) als auch die zweite Nockenoberfläche (86) eine konvex gekrümmte Oberfläche aufweisen, die sich in Richtung der Kolbenanordnung (28) wölbt,
**dadurch gekennzeichnet, dass**
eine erste Tangente T₁ näher an der Kolbenanordnung (28) liegt als eine zweite Tangente T₂ an einer stromabwärtigen Seite einer Position P₀ in Bezug auf eine Drehrichtung des Ringnockens (32), wobei die Position P₀ eine Position ist, an der die erste Nockenoberfläche (66) und die zweite Nockenoberfläche (86) einander schneiden, die erste Tangente T₁ eine Tangente an die erste Nockenoberfläche (66) an der Position P₀ ist, und die zweite Tangente T₂ eine Tangente an die zweite Nockenoberfläche (86) an der Position P₀ ist.

2. Die hydraulische Maschine (20) nach Anspruch 1,
wobei die zweite Nockenoberfläche (86) in Bezug auf die radiale Richtung der hydraulischen Maschine (20) näher an der Kolbenanordnung (28) angeordnet ist als die erste Nockenoberfläche (66), an einem hinteren Ende der ersten Nockenoberfläche (66).

3. Die hydraulische Maschine (20) nach Anspruch 1 oder 2,
wobei die erste Nockenoberfläche (66) zusammen mit einer Nockenoberfläche (67) eines Abschnitts des vorausgehenden Segments (60) eine durchgehende gekrümmte Fläche bildet, wobei der Abschnitt an einer Vorderseite des ersten Eingriffsabschnitts (64) angeordnet ist.

4. Die hydraulische Maschine (20) nach einem der Ansprüche 1 bis 3,
wobei die zweite Nockenoberfläche (86) eine kontinuierliche gekrümmte Fläche mit einer Nockenoberfläche (87) eines Abschnitts des nachfolgenden Segments (80) bildet, wobei der Abschnitt auf einer rückwärtigen Seite des zweiten Eingriffsabschnitts (84) angeordnet ist.

5. Die hydraulische Maschine (20) nach einem der Ansprüche 1 bis 4,
wobei die erste Nockenoberfläche (66) und die zweite Nockenoberfläche (86) einander an einer Position in einem Bereich von 0.3L₁ bis 0.7L₁ in Bezug auf ein hinteres Ende der ersten Nockenoberfläche (66) schneiden, wobei L₁ eine Länge des ersten Eingriffsabschnitts (64) in der Umfangsrichtung ist.

6. Die hydraulische Maschine (20) nach einem der Ansprüche 1 bis 5,
wobei die erste Nockenoberfläche (66) und die zweite Nockenoberfläche (86) einander an einer Position in einem Bereich von 0.3L₂ bis 0.7L₂ in Bezug auf das vordere Ende der zweiten Nockenoberfläche (86) schneiden, wobei L₂ eine Länge des zweiten Eingriffsabschnitts (84) in der Umfangsrichtung ist.

7. Die hydraulische Maschine (20) nach einem der Ansprüche 1 bis 6, ferner umfassend:
einen Zylinder (22), der zusammen mit einem Kolben (24) der Kolbenanordnung (28) eine Arbeitskammer bildet,
wobei der Ringnocken (32) eine Nockenoberfläche aufweist, die der Kolbenanordnung (28) zugewandt ist und eine Arbeitsoberfläche, die mit der Kolbenanordnung (28) in Kontakt steht, wenn ein Druck der Arbeitskammer hoch ist, und eine Atmungsoberfläche, die mit der Kolbenanordnung (28) in Kontakt steht, wenn der Druck der Arbeitskammer niedrig ist, enthält, und
wobei der Eingriffsbereich des ersten
Eingriffsabschnitts (64) des vorausgehenden Segments (60) und des zweiten Eingriffsabschnitts (84) des nachfolgenden Segments (80) innerhalb eines Erstreckungsbereichs der Atmungsoberfläche liegt.

8. Die hydraulische Maschine (20) nach Anspruch 7,
wobei die Nockenoberfläche des Ringnockens (32) eine Mehrzahl von oberen Punkten (36), die in Bezug auf die radiale Richtung am nächsten an der Kolbenanordnung (28) liegen, und eine Mehrzahl von unteren Punkten (38), die in Bezug auf die radiale Richtung am weitesten von der Kolbenanordnung (28) entfernt sind, aufweist, wobei die oberen Punkte (36) und die unteren Punkte (38) in Umfangsrichtung abwechselnd angeordnet sind, und
wobei jedes des vorausgehenden Segments (60) und des nachfolgenden Segments (80) mindestens einen der oberen Punkte (36) und mindestens einen der unteren Punkte (38) umfasst.

9. Ein Ringnocken (32) für eine hydraulische Maschine (2) eines Radialkolbentyps mit einer Rotorwelle (30), die sich in einer axialen Richtung der hydraulischen Maschine (20) erstreckt, und einer Kolbenanordnung (28), die konfiguriert ist, um eine Hin- und Herbewegung in Übereinstimmung mit der Drehung des Ringnockens (32) auszuführen, wobei der Ringnocken (32) konfiguriert ist, um sich in einer Umfangsrichtung der hydraulischen Maschine (20) zu erstrecken und sich zusammen mit der Rotorwelle (30) zu drehen, wobei der Ringnocken (32) umfasst:
eine Mehrzahl von Nockensegmenten (58,60,80), die in der Umfangsrichtung angeordnet sind,
wobei mindestens ein benachbartes Paar der Vielzahl von Nockensegmenten (58,60,80) ein vorausgehendes Segment (60) und ein nachfolgendes Segment (80), das in einer Drehrichtung des Ringnockens (32) nach dem vorausgehenden Segment (60) angeordnet ist, umfasst,
wobei das vorausgehende Segment (60) einen ersten Eingriffsabschnitt (64) aufweist, der an einem hinteren Endabschnitt des vorausgehenden Segments (60) in Richtung des nachfolgenden Segments (80) vorsteht,
wobei das nachfolgende Segment (80) einen zweiten Eingriffsabschnitt (84) aufweist, der an einem vorderen Endabschnitt des nachfolgenden Segments (80) in Richtung des vorausgehenden Segments (60) vorsteht und mit dem ersten Eingriffsabschnitt (64) des vorausgehenden Segments (60) in Eingriff bringbar ist,
wobei der erste Eingriffsabschnitt (64) eine erste Nockenoberfläche (66) in dem hinteren Endabschnitt des vorausgehenden Segments (60) aufweist, wobei die erste Nockenoberfläche (66) der Kolbenanordnung (28) zugewandt ist, und der zweite Eingriffsabschnitt (84) eine zweite Nockenoberfläche (86) in dem vorderen Endabschnitt des nachfolgenden Segments (80) aufweist, wobei die zweite Nockenoberfläche (86) der Kolbenanordnung (28) zugewandt ist, wobei die erste Nockenoberfläche (66) näher an der Kolbenanordnung (28) angeordnet ist als die zweite Nockenoberfläche (86) in Bezug auf eine radiale Richtung der hydraulischen Maschine (20) an einem vorderen Ende der zweiten Nockenoberfläche (86),
wobei die erste Nockenoberfläche (66) und die zweite Nockenoberfläche (86) einander in einem Eingriffsbereich des ersten Eingriffsabschnitts (64) und des zweiten Eingriffsabschnitts (84) schneiden, und
wobei sowohl die erste Nockenoberfläche (66) als auch die zweite Nockenoberfläche (86) eine konvex gekrümmte Oberfläche aufweisen, die sich in Richtung der Kolbenanordnung (28) wölbt,
**dadurch gekennzeichnet, dass**
eine erste Tangente T₁ näher an der Kolbenanordnung (28) liegt als eine zweite Tangente T₂ an einer stromabwärtigen Seite einer Position P₀ in Bezug auf eine Drehrichtung des Ringnockens (32), wobei die Position P₀ eine Position ist, an der sich die erste Nockenoberfläche (66) und die zweite Nockenoberfläche (86) miteinander schneiden, die erste Tangente T₁ eine Tangente an die erste Nockenoberfläche (66) an der Position P₀ ist, und die zweite Tangente T₂ eine Tangente an die zweite Nockenoberfläche (86) an der Position P₀ ist.

10. Eine Stromerzeugungsvorrichtung (1) des Typs mit erneuerbarer Energie, umfassend:
einen Rotor (3), der konfiguriert ist, um erneuerbare Energie zu empfangen, um sich zu drehen,
eine Hydraulikpumpe (8), die konfiguriert ist, um von dem Rotor (3) angetrieben zu werden, um ein Arbeitsöl unter Druck zu setzen,
einen Hydraulikmotor (10), der konfiguriert ist, um durch das Arbeitsöl angetrieben zu werden, und
einen Generator (16), der konfiguriert ist, um von dem Hydraulikmotor (10) angetrieben zu werden,
wobei mindestens eine von der Hydraulikpumpe (8) oder dem Hydraulikmotor (10) die hydraulische Maschine (20) nach einem der Ansprüche 1 bis 8 ist.

11. Die Stromerzeugungsvorrichtung (1) des Typs mit erneuerbarer Energie nach Anspruch 10, die konfiguriert ist, um Windenergie als die erneuerbare Energie zur Erzeugung von elektrischem Strom zu nutzen.

## Revendications

1. Machine (20) hydraulique d'un type à piston radial, comprenant :
un arbre (30) de rotor s'étendant dans une direction axiale de la machine (20) hydraulique ;
une came (32) annulaire s'étendant dans une direction circonférentielle de la machine (20) hydraulique et configurée pour tourner ensemble avec l'arbre (30) du rotor ;
un ensemble (28) à piston configuré pour effectuer un mouvement de va et vient en accord avec la rotation de la came (32) annulaire,
dans laquelle la came (32) annulaire comprend une pluralité de segments (58, 60, 80) de came disposés dans la direction circonférentielle,
dans laquelle au moins une paire voisine de la pluralité de segments (58, 60, 80) de came comprend un segment (60) précédent et un segment (80) suivant disposé à la suite du segment (60) précédent dans le sens de rotation de la came (32) annulaire,
dans lequel le segment (60) précédent a une première partie (64) d'enclenchement faisant saillie vers le segment (80) suivant à une partie d'extrémité arrière du segment (60) précédent,
dans laquelle le segment (80) suivant a une deuxième partie (84) d'enclenchement faisant saillie vers le segment (60) précédent à une partie d'extrémité avant du segment (81) suivant et pouvant s'enclencher avec la première partie (64) d'enclenchement du segment (60) précédent,
dans laquelle la première partie (64) d'enclenchement a une première surface (66) de came dans la partie d'extrémité arrière du segment (60) précédent, la première surface (66) de came faisant face à l'ensemble (28) à piston et la deuxième partie (84) d'enclenchement a une deuxième surface (86) de came dans la partie d'extrémité avant du segment (80) suivant, la deuxième surface (86) de came faisant face à l'ensemble (28) à piston, la première surface (66) de came étant disposée plus près de l'ensemble (28) à piston que la deuxième surface (86) de came par rapport à une direction radiale de la machine (20) hydraulique à une extrémité avant de la deuxième surface (86) de came,
dans laquelle la première surface (66) de came et la deuxième surface (86) de came sont en intersection l'une avec l'autre dans une région d'enclenchement de la première partie (64) d'enclenchement et de la deuxième partie (84) d'enclenchement et
dans laquelle chacune de la première surface (66) de came et de la deuxième surface (86) de came a une surface incurvée de manière convexe, bombée vers l'ensemble (28) à piston,
**caractérisé en ce que**
une première tangente (T1) est plus près de l'ensemble (28) à piston qu'une deuxième tangente (T2) a un côté en aval d'une position (P0) par rapport à un sens de rotation de la came (32) annulaire, la position (P0) étant une position dans laquelle la première surface (66) de came et la deuxième surface (86) de came sont en intersection l'une avec l'autre, la première tangente (T1) étant une tangente à la première surface (66) de came à la position (P0) et la deuxième tangente (T2) étant une tangente à la deuxième surface (86) à la position (P0).

2. Machine (20) hydraulique suivant la revendication 1,
dans laquelle la deuxième surface (86) de came est disposée plus près de l'ensemble (28) à piston que la première surface (66) de came par rapport à la direction radiale de la machine (20) hydraulique, à une extrémité arrière de la première surface (66) de came.

3. Machine (20) hydraulique suivant la revendication 1 ou 2,
dans laquelle la première surface (66) de came forme une surface incurvée continue ensemble avec une surface (67) de came d'une partie du segment (60) précédent, la partie étant disposée d'un côté vers l'avant de la première partie (64) d'enclenchement.

4. Machine (20) hydraulique suivant l'une quelconque des revendications 1 à 3,
dans laquelle la deuxième surface (86) de came forme une surface incurvée continue avec une surface (87) de came d'une partie du segment (80) suivant, la partie étant disposée d'un côté vers l'arrière de la deuxième partie (84) d'enclenchement.

5. Machine (20) hydraulique suivant l'une quelconque des revendications 1 à 4,
dans laquelle la première surface (66) de came et la deuxième surface (86) de came sont en intersection l'une avec l'autre en une position dans une plage de 0,3 L₁ à 0,7 L₁ en référence à une extrémité arrière de la première surface (66) de came, L1 étant une longueur de la première partie (64) d'enclenchement dans la direction circonférentielle.

6. Machine (20) hydraulique suivant l'une quelconque des revendications 1 à 4,
dans laquelle la première surface (66) de came et la deuxième surface (86) de came sont en intersection l'une avec l'autre en une position dans une plage de 0,3 à 0,7 L₂ en référence à l'extrémité avant de la deuxième surface (86) de came, L₂ étant une longueur de la deuxième partie (84) d'enclenchement dans la direction circonférentielle.

7. Machine (20) hydraulique suivant l'une quelconque des revendications 1 à 6, comprenant en outre :
un cylindre (22) formant une chambre de travail ensemble avec un piston (24) de l'ensemble (28) à piston,
dans laquelle la came (32) annulaire a une surface de came faisant face à l'ensemble (28) à piston et ayant une surface de travail pour être en contact avec l'ensemble (28) à piston lorsqu'une pression dans la chambre de travail est haute et une surface de respiration pour être en contact avec l'ensemble (28) à piston lorsque la pression dans la chambre de travail est basse et
dans laquelle la région d'enclenchement de la première partie (64) d'enclenchement du segment (60) précédent et de la deuxième partie (84) d'enclenchement du segment (80) précédent est dans une région d'extension de la surface de respiration.

8. Machine (20) hydraulique suivant l'une quelconque des revendications 1 à 7,
dans laquelle la surface de la came (32) annulaire a une pluralité de points (36) de sommet, qui sont les plus près de l'ensemble (28) à piston par rapport à la direction radiale, et une pluralité de points (38) de fond, qui sont les plus loin de l'ensemble (28) à piston par rapport à la direction radiale, les points (36) de sommet et les points (38) de fond étant disposés en alternance dans la direction circonférentielle et dans laquelle chacun du segment (60) précédent et du segment (80) suivant a au moins l'un des points (36) de sommet et au moins l'un des points (38) de fond.

9. Came (32) annulaire d'une machine (2) hydraulique (28) à piston radial ayant un arbre (30) de rotor s'étendant dans une direction axiale de la machine (20) hydraulique et un ensemble (28) à piston configuré pour effectuer un mouvement de va-et-vient en accord avec la rotation de la came (32) annulaire, dans laquelle la came (32) annulaire est configurée pour s'étendre dans une direction circonférentielle de la machine (20) hydraulique et pour tourner ensemble avec l'arbre (30) du rotor, la came (32) annulaire comprenant :
une pluralité de segments (58, 60, 80) de came disposés dans la direction circonférentielle,
dans laquelle au moins une came voisine de la pluralité de segments (58, 60, 80) de came à un segment (60) précédent et un segment (80) suivant disposé en suivant le segment (60) précédent dans un sens de rotation de la came (32) annulaire,
dans laquelle le segment (60) précédent a une première partie (64) d'enclenchement faisant saillie vers le segment (80) suivant à une partie d'extrémité arrière du segment (60) précédent,
dans laquelle le segment (80) suivant a une deuxième partie (84) d'enclenchement faisant saillie vers le segment (60) précédent à une partie d'extrémité avant du segment (81) suivant et pouvant s'enclencher avec la première partie (64) d'enclenchement du segment (60) précédent,
dans laquelle la première partie (64) d'enclenchement a une première surface (66) de came dans la partie d'extrémité arrière du segment (60) précédent, la première surface (66) de came faisant face à l'ensemble (28) à piston et la deuxième partie (84) d'enclenchement a une deuxième surface (86) de came dans la partie d'extrémité avant du segment (80) suivant, la deuxième surface (86) de came faisant face à l'ensemble (28) à piston, la première surface (66) de came étant disposée plus près de l'ensemble (28) à piston que la deuxième surface (86) de came par rapport à une direction radiale de la machine (20) hydraulique à une extrémité avant de la deuxième surface (86) de came,
dans laquelle la première surface (66) de came et la deuxième surface (86) de came sont en intersection l'une avec l'autre dans une région d'enclenchement de la première partie (64) d'enclenchement et de la deuxième partie (84) d'enclenchement et
dans laquelle chacune de la première surface (66) de came et de la deuxième surface (86) de came a une surface incurvée de manière convexe, bombée vers l'ensemble (28) à piston,
**caractérisé en ce que**
une première tangente (T1) est plus près de l'ensemble (28) à piston qu'une deuxième tangente (T2) a un côté en aval d'une position (P0) par rapport à un sens de rotation de la came (32) annulaire, la position (P0) étant une position dans laquelle la première surface (66) de came et la deuxième surface (86) de came sont en intersection l'une avec l'autre, la première tangente (T1) étant une tangente à la première surface (66) de came à la position (P0) et la deuxième tangente (T2) étant une tangente à la deuxième surface (86) à la position (P0).

10. Installation (1) de production d'électricité du type à énergie renouvelable comprenant :
un rotor (3) configuré pour recevoir de l'énergie renouvelable afin de tourner ;
une pompe (8) hydraulique configurée pour être entraînée par le rotor (3) pour mettre sous pression une huile de travail ;
un moteur (10) hydraulique configuré pour être entraîné par l'huile de travail ;
un générateur (16) configuré pour être entraîné par le moteur (10) hydraulique
dans laquelle au moins l'un de la pompe (8) hydraulique ou du moteur (10) hydraulique est la machine (20) hydraulique suivant l'une quelconque des revendications 1 à 8.

11. Installation (1) de production d'électricité du type à énergie renouvelable, suivant la revendication 10, configurée pour utiliser l'énergie du vent comme énergie renouvelable pour produire de l'électricité.
